# FASCICULE DE BREVET EUROPEEN

(11) **EP 1 064 769 B1**
(45) Date de publication et mention de la délivrance du brevet: **11.01.2006**
(21) Numéro de dépôt: 99909019.4
(22) Date de dépôt: 17.03.1999
(51) Int. Cl.: H04M 1/00, H04Q 7/32

(54) **TERMINAL DE TELECOMMUNICATION LECTEUR DE CARTE A PUCE**
KARTENLESETELECOMMUNICATIONSENDGERÄT
CHIP CARD READER TELECOMMUNICATION TERMINAL

(30) Priorité: 20.03.1998 FR 9803484
(43) Date de publication de la demande: 03.01.2001
(73) Titulaire: GEMPLUS, 13881 Gémenos Cedex (FR)
(72) Inventeur: VANNEL, Pierre, F-05500 Saint Bonnet (FR); OHANIAN, Henri, F-13005 Marseille (FR)
(86) Numéro de dépôt international: PCT/FR1999/000602
(87) Numéro de publication internationale: WO 1999/049637

(56) Documents cités:
- EP-A- 0 733 992
- EP-A- 0 820 178
- WO-A-95/04328
- WO-A-96/25828
- WO-A-98/33343
- FR-A- 2 748 834
- GB-A- 2 296 801
- US-A- 5 465 401

## Description

L'invention concerne un terminal de télécommunication muni d'une carte à circuit intégré dite carte à puce comprenant un ou plusieurs programmes applicatifs.

L'invention s'applique tout particulièrement aux terminaux de téléphonie cellulaire type terminaux mobiles comme les téléphones mobiles répondant aux normes GSM ou DCS.

On rappelle que les cartes à puce utilisées dans les terminaux téléphoniques permettent l'identification de l'abonné et comportent un programme d'application téléphonie. Ces cartes sont généralement dénommées cartes SIM (Subscriber Identity Module).

On prévoit de nouvelles générations de terminaux téléphoniques fonctionnant avec deux cartes à puce, une carte à puce dédiée à la téléphonie et une autre carte à puce dédiée à d'autre applications, par exemple l'application porte-monnaie électronique.

Pour cela ces terminaux doivent être équipés de deux interfaces de lecture de cartes à puce, l'une pour communiquer avec la carte à puce d'identification d'abonné et l'autre avec la carte à puce dédiée aux autres applications.

Cependant, de nouveaux développements visent à réduire l'encombrement des téléphones mobiles. Une manière d'y parvenir consiste à n'utiliser qu'une carte à puce qui est alors multiapplicative. Ainsi, le téléphone mobile n'a plus besoin d'avoir deux interfaces de lecture.

Il est donc prévu d'après ces nouveaux développements qu'une même carte à puce comporte plusieurs programmes d'application, l'une étant la téléphonie, une autre pouvant être une application bancaire telle que le porte-monnaie électronique, une autre pouvant être une application fidélité (points de fidélité), santé, ou encore application jeux.

Les terminaux de télécommunication sont prévus pour êtres reliés à un réseau de télécommunication emprunté par des abonnés du téléphone pour accéder à d' autres abonnés ou à des services.

Parmi ces réseaux on peut citer les réseaux de téléphonie, réseau commuté ou réseau à intégration de service et le réseau de téléphonie cellulaire.

Jusqu'à présent l'accès à la carte à puce présente dans un terminal ou aux cartes puces présentes dans ledit terminal, n'était possible qu'à travers le terminal, à partir dudit réseau de télécommunication.

Il est prévu avec les nouveaux développements que cet accès soit ouvert à toute unité de traitement du type ordinateur ou micro-ordinateur (PC personal computer ou NC network computer), dénommée dans la suite micro-ordinateur.

Le document WO 96 25828 décrit un terminal de télécommunication avec une carte à puce permettant le fonctionnement de plusieurs applications contenues dans la carte et mettant en oeuvre des moyens d'accès à la carte par un micro-ordinateur outre que par un réseau de télécommunication.

A cette fin le terminal de télécommunication doit être équipé de moyens de connexions physiques avec le micro-ordinateur. I1 s'agit d'un connecteur et d'une liaison par câble. Certains terminaux sont déjà équipés d'un port d'entrée-sortie permettant de les connecter à un micro-ordinateur pour le transfert de données à travers le réseau radio-électrique.

Il est donc envisagé selon ces développements d'utiliser les moyens d'accès physiques existants. Cependant, le problème d'accès à la carte par d'autres moyens que le réseau de téléphonie mobile n'est pour autant pas résolu.

La demanderesse a résolu ce problème en prévoyant dans le terminal des moyens d'accès loqiques à la carte à partir d'un micro-ordinateur et des moyens de gestion des accès provenant du réseau de télécommunication et/ou du micro-ordinateur.

Les moyens d'accès logiques comprennent des moyens d'interprétation de commandes émises à partir du micro-ordinateur et/ou émises à partir du réseau, d'exécution de ces commandes s'il s'agit de commandes exécutables par le terminal et de transmission à la carte s'il s'agit de commandes exécutables par la carte.

Selon une caractéristique de l'invention, les moyens de gestion 20 sont aptes :
- Selon un premier mode de fonctionnement à :
   - laisser actifs les deux moyens d'accès logiques (par micro-ordinateur et réseau), à passer alors en mode verrouillage pour bloquer momentanément l'un des moyens d'accès à la carte à partir du micro-ordinateur ou à partir du rëaeau, laissant l'autre accès ouvert, et à mettre en attente les commandes arrivant par les moyens d'accès bloqués ;
- Selon un deuxième mode de fonctionnement à :
   - désactiver temporairement l'un des moyens d'accès, le terminal fonctionnant alors exclusivement en mode lecteur de carte à puce (accès par le microordinateur) ou exclusivement en mode terminal de télécommunication (accès par le réseau).

En effet, ouvrir un accès à la carte à travers le terminal, autre que par le canal téléphonique pose aussi le problème de la gestion des accès pour éviter tout conflit et/ou perte et/ou modification involontaire d'informations sur la carte. Ce problème a donc été résolu par la demanderesse.

De préférence, les moyens de gestion d'accès laissent actifs les deux moyens d'accès et mettent en attente les commandes arrivant par les moyens d'accès réseau lorsque le micro-ordinateur demande un accès pour une application différente de celle qui est susceptible d'être utilisée par le réseau.

De préférence les moyens de gestion d'accès désactivent temporairement les moyens d'accès réseau lorsque le micro-ordinateur demande un accès pour la même application susceptible d'être utilisée par le réseau.

Les moyens de gestion d'accès à la carte comportent des moyens de verrouillage d'accès à la carte par le réseau et de déverrouillage, activés par le terminal après réception d'une commande de verrouillage émise par le micro-ordinateur pour lui permettre de traiter deux accès simultanés à la carte, un accès étant demandé par le réseau pour une application et l'autre étant demandé par le micro-ordinateur pour une application distincte.

Les moyens de gestion des accès à la carte comportent également des moyens de passage en mode lecteur de carte exclusif, réversibles, désactivant le mode de fonctionnement terminal de télécommunication, ces moyens étant activés par le terminal après réception d'une commande de mode lecteur.

Ceci permet de traiter le cas où un accès est demandé par le micro-ordinateur pour une application dédiée aux accès par le réseau. Le terminal fonctionne alors en lecteur de carte à puce.

Avantageusement, les moyens de verrouillage comportent une temporisation, pendant laquelle le terminal est apte à recevoir une ou plusieurs commande(s) du réseau téléphonique et à mémoriser cette ou ces commande(s) jusqu'au déverrouillage.

Avantageusement, la durée de la temporisation correspond à la durée maximale requise pour l'exécution d'une commande application par la carte.

On pourra se reporter à la description qui est faite ci-après et qui est donnée à titre indicatif et nullement limitatif en regard des dessins ci-après sur lesquels :
- la figure 1, illustre schématiquement le fonctionnement du terminal dans le cas de deux accès simultanés vers deux applications distinctes,
- la figure 2, illustre schématiquement le fonctionnement du terminal dans le cas du mode lecteur de cartes à puce,
- la figure 3, illustre le protocole de communication selon le mode de fonctionnement illustré par la figure 1,
- la figure 4, illustre le protocole de communication selon le mode de fonctionnement illustré par la figure 2.

Actuellement, une carte SIM par exemple, introduite dans un terminal mobile reçoit des commandes normalisées par la norme du réseau de téléphonie mobile par exemple: la norme GSM.

Les commandes pour les cartes sont strictement contrôlées par le terminal mobile. On appellera ce moyen d'accès: canal GSM (il s'agit d'un canal logique et non pas physique).

Accéder à la carte SIM dans le terminal mobile à partir d'un PC nécessite un autre moyen d'accès: on appellera canal lecteur ce moyen ( il s'agit d'un canal logique lié au PC).

L'accès simultané à la carte SIM par deux canaux différents pose le problème du partage d'une ressource. A cette fin des commandes de verrouillage et de déverrouillage de l'accès à la carte sont prévues.

Pour que le canal GSM reste prioritaire, un mécanisme de temporisation "timeout" (ou "compte à rebours") en déverràuille l'accès.

L'accès simultané par deux applications différentes dans une même carte par chacun des canaux, est résolu par le système d'exploitation multiapplicatif chargé dans le terminal.

Il y a des cas, et cela sera détaillé dans la suite, où il est intéressant d'accéder par le canal Lecteur à la même application utilisée par le canal GSM. Comme la carte ne peut pas résoudre ce problème, il est prévu conformément à l'invention de changer de mode de fonctionnement, le terminal mobile passant en mode lecteur de cartes à puce.

Le terminal donne de préférence la priorité au canal GSM. Les commandes SIM du protocole de communication réseau ( GSM) sont exécutées dans un délai raisonnable par la carte. Pour ce faire, lorsque la carte est sollicitée au travers du canal lecteur, elle ne peut l'être au-delà d'une durée prédéterminée par une temporisation (timeout), éventuellement configurable. En pratique cette durée correspond à la durée d'exécution d'une commande application (APDU: Application Protocole Data Unit) par la carte.

En pratique chaque commande application (format APDU) envoyée à la carte par le canal lecteur est encadrée par une commande Mode Verrouillage et par une commande Mode Déverrouillage.

D'autre part, dans les cas d'un accès multiple, le type des commandes envoyées par le canal lecteur doit impérativement être différent du type des commandes envoyées via le canal GSM, car la carte 3 n'a aucun moyen de distinguer la provenance des commandes c'est à dire les commandes via le canal lecteur ou commandes via le canal GSM. Une séquence de commandes de même type crée un contexte dans la carte. Des commandes du même type arrivant par un autre canal pourraient donc modifier ce contexte de façon imprévisible, provoquant un dysfonctionnement de la carte, résolu uniquement par un reset de la carte (power off/power on du terminal).

Ainsi afin de pouvoir exécuter des commandes arrivant par le canal Lecteur du même type que celles transmises par le canal GSM, il est prévu de passer le terminal en mode lecteur exclusif comme cela va être détaillé dans la suite.

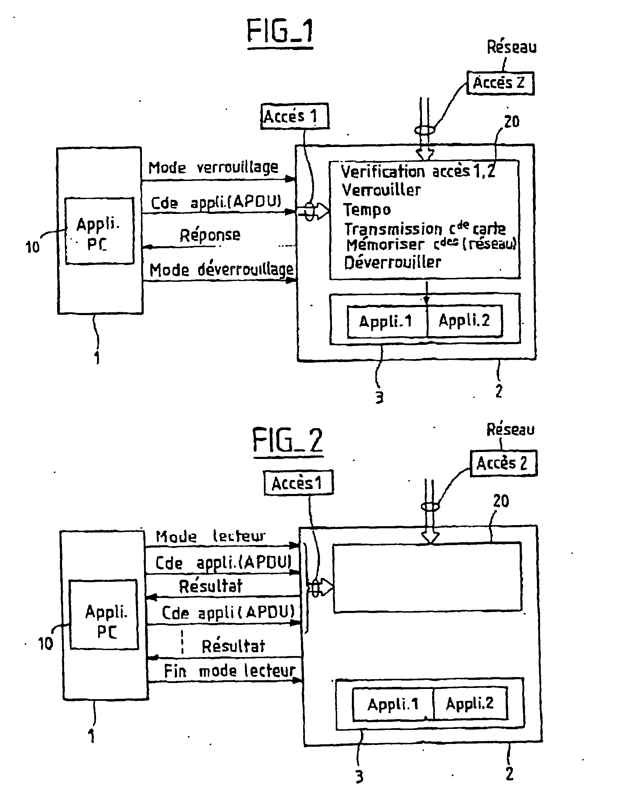

On va maintenant décrire le fonctionnement du terminal 2 à partir du schéma de la figure 1, qui correspond au cas d'accès multiples : accès 1 par le PC et accès 2 par le réseau pour atteindre deux applications différentes appli.1 et appli.2 respectivement.

L'application 10 installée sur le PC 1 envoie la commande Mode Verrouillage, pour avoir accès à la carte du terminal mobile.

Lorsque cette commande aboutit, l'application PC envoie une commande application (format APDU) à la carte, via le mobile, en récupère le résultat dans le PC et envoie la commande Mode Déverrouillage de l'accès à la carte, au terminal.

On va maintenant décrire le fonctionnement du terminal à partir du schéma de la figure 2 dans le cas où le PC désire accéder à l'appli.1 (de téléphonie) habituellement utilisée par le réseau.

L'application installée sur le PC envoie la commande Mode Lecteur, pour avoir un accès exclusif à la carte du terminal mobile et par conséquent désactiver la fonction terminal de télécommunication.

Lorsque cette commande aboutit, l'application PC envoie une ou plusieurs commandes application (format APDU) à la carte, via le mobile, en récupère à chaque fois le résultat dans le PC, puis, lorsqu'elle a terminé, l'application PC envoie la commande Fin Mode Lecteur au terminal, rouvrant ainsi l'accès par le réseau.

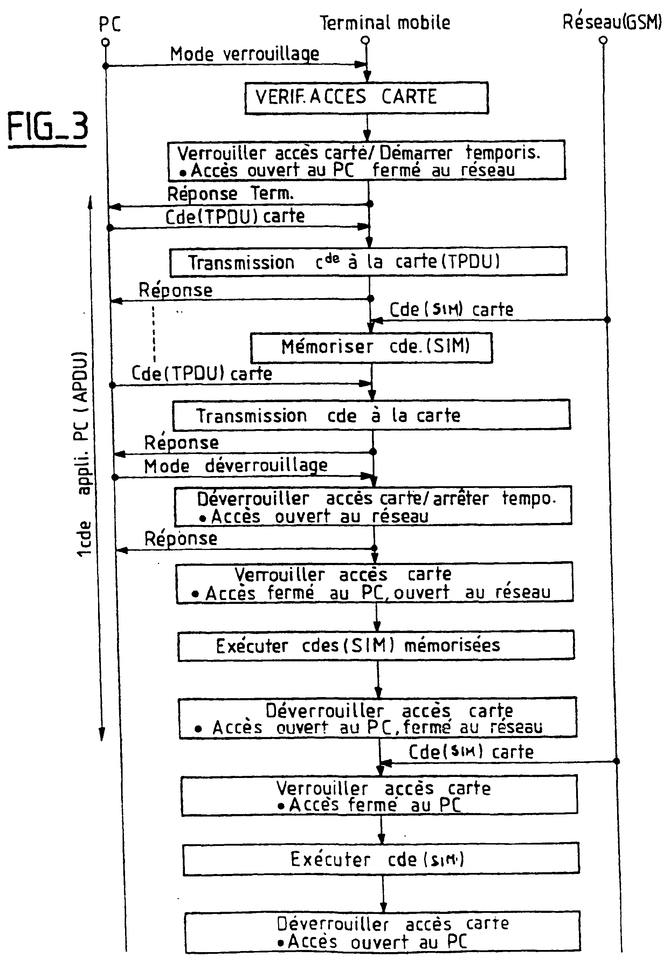

On va maintenant décrire le protocole de communication entre PC, terminal et Réseau selon la figure 1; ce protocole est illustré sur la figure 3.

Lorsque l'application sur le PC souhaite faire exécuter une commande APDU (qui peut contenir plusieurs commandes TPDU ) au terminal mobile, elle lui demande un accès à la carte au moyen de la commande Mode Verrouillage. Le terminal vérifie si l'accès est disponible. Dans ce cas, il pose un verrou limitant l'accès au seul canal Lecteur (c'est à dire qu'il ouvre l'accès au micro-ordinateur) et déclenche une temporisation au bout de laquelle le verrou sera levé automatiquement. Le PC envoie alors les commandes TPDU composant la commande APDU, que le terminal fait exécuter par la carte. Le terminal envoi les réponses de la carte. A la fin, le PC demande au terminal de libérer l'accès au moyen de la commande Mode Déverrouillage le terminal s'exécute et met fin à la temporisation.

Si pendant ce temps le terminal a reçu via le canal GSM des commandes (SIM) à faire exécuter par la carte, il les mémorise.

Lorsque l'accès 2 est à nouveau disponible, le terminal verrouille l'accès au seul canal GSM, et fait exécuter les commandes en attente par la carte. A la fin, il libère l'accès 2.

En mode courant, lorsque le terminal reçoit une commande via le canal GSM, il verrouille l'accès au seul canal GSM, fait exécuter la commande correspondante par la carte, puis libère l'accès.

La durée maximum de la temporisation mis en oeuvre par le terminal est directement lié à la capacité de mémorisation des commandes reçues via le canal GSM.

Cette temporisation impose une durée maximum d'exécution d'une APDU transmise via le canal Lecteur par la carte.

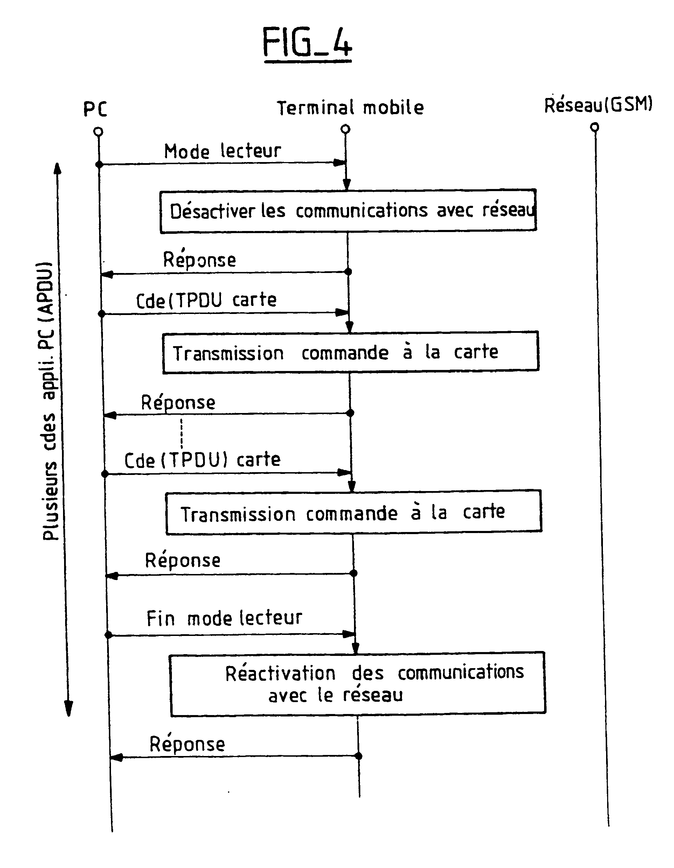

Le protocole correspondant au Mode Lecteur exclusif est décrit ci-après et illustre par la figure 4.

L'intérêt de ce mode est de permettre à l'utilisateur d'avoir accès à la carte pour notamment envoyer des commandes (personnaliser la carte) sans risque d'interférer avec l'usage par le réseau GSM. Il n'est plus nécessaire d'extraire la carte du terminal mobile pour l'insérer dans un lecteur classique ; le terminal mobile devient un lecteur.

Le PC demande le changement en mode lecteur exclusif au moyen de la commande Mode Lecteur. Le terminal désactive toutes les communications avec le réseau GSM.

Le PC utilise alors le terminal comme un lecteur de carte usuel en lui envoyant des commandes TPDU. Le terminal transmet les réponses de la carte à ces commande. A la fin de l'opération, le PC demande la réactivation des communications avec le réseau GSM au moyen d'une commande Fin Mode Lecteur.

Pour garder une cohérence avec le mode accès multiple, chaque commande APDU envoyée au terminal pourrait être encadrée par des commandes Mode Verrouillage et Mode Déverrouillage. Ces commandes dans le mode lecteur exclusif devraient être sans effet dans le terminal : la temporisation ne serait pas déclenchée dans le terminal car les commandes réussissent tout le temps.

A la remise en route du terminal, suite à un échec durant une communication ou autre, un mode de fonctionnement par défaut est prévu, il s'agira préférentiellement du mode de fonctionnement en terminal de télécommunication (accès à partir du réseau).

Le terminal pourra être utilisé par exemple dans le cas de cartes SIM multiapplicatives pour par exemple :
- le contrôle d'accès à des ordinateurs distants, le paiement (porte-monnaie électronique, crédit, ...), .... etc.,
- les terminaux de points de ventes sur GSM, ATM sur GSM,..., etc.,
- la personnalisation par l'abonné de sa carte SIM multiplicative.

D'autres manières de gestion peuvent être imaginées comme par exemple un accès prioritaire GSM, un accès en temps partage, etc....

Dans le cas d'un accès en temps partagé, on peut prévoir un stockage préalable en mémoire tampon respectivement pour chaque canal et une autorisation des accès, par lecture alternative de chacune des mémoires tampon.

## Revendications

1. Terminal de télécommunications (2) comprenant des moyens d'accès par un réseau de télécommunication, des moyens d'accès par une unité de traitement de type micro-ordinateur (1), une carte à puce (3) pour la mise en oeuvre d'au moins une application, des moyens d'accès logique (accès 2) à la carte par un réseau de télécommunication, des moyens d'accès logique (accès 1) à la carte (3) à partir d'un micro-ordinateur (1) et des moyens de gestion (20) des accès provenant du réseau de télécommunication et/ou du micro-ordinateur **caractérisé en ce que** les moyens de gestion (20) sont aptes à :
- selon un premier mode de fonctionnement, à laisser actifs les deux moyens d'accès logiques, à passer alors en mode verrouillage pour bloquer momentanément l'un des accès à la carte par l'un des moyens d'accès à partir du micro-ordinateur ou à partir du réseau, laissant l'autre accès ouvert, à mettre en attente les commandes arrivant par les moyens d'accès réseau lorsque le micro-ordinateur demande un accès pour une application différente de celle qui est susceptible d'être utilisée par le réseau si les moyens d'accès bloqués sont les moyens d'accès réseau, et à mettre en attente les commandes arrivant par les moyens d'accès bloqués si les moyens d'accès bloqués sont les moyens d'accès à partir du micro-ordinateur;
- selon un deuxième mode de fonctionnement à désactiver temporairement l'un des moyens d'accès, le terminal fonctionnant alors exclusivement en mode lecteur de carte à puce avec accès par le micro-ordinateur demandant un accès pour la même application susceptible d'être utilisée par le réseau ou exclusivement en mode terminal de télécommunication avec accès par le réseau.

2. Terminal de télécommunication selon la revendication 1, **caractérisé en ce que** les moyens d'accès logiques comprennent des moyens d'interprétation de commande émise à partir du micro-ordinateur et/ou émise à partir du réseau, d'exécution de ces commandes s'il s'agit de commandes exécutables par le terminal et de transmission à la carte s'il s'agit de commandes exécutables par la carte.

3. Terminal de télécommunication selon la revendication 1, **caractérisé en ce que** les moyens de gestion des accès à la carte comportent des moyens de verrouillage logique d'accès à la carte par le réseau et de déverrouillage, activés par le terminal après réception d'une commande de verrouillage émise par le micro-ordinateur.

4. Terminal de télécommunication selon la revendication 1, **caractérisé en ce que** les moyens de gestion des accès à la carte comportent des moyens de passage en mode lecteur de carte exclusif, réversibles, désactivant le mode de fonctionnement terminal de télécommunication, activés par le terminal après réception d'une commande de mode lecteur.

5. Terminal de télécommunication selon la revendication 3, **caractérisé en ce que** les moyens de verrouillage comportent une temporisation, pendant laquelle le terminal est apte à recevoir une commande du réseau téléphonique et à mémoriser cette commande jusqu'au déverrouillage.

6. Terminal de télécommunication selon la revendication 5, **caractérisé en ce que** la durée de la temporisation correspond à la durée maximale requise pour l'exécution par la carte d'une commande lancée par l'application du micro-ordinateur.

## Patentansprüche

1. Telekommunikationsterminal (2) mit Zugangsmitteln durch ein Telekommunikationsnetz, Zugangsmitteln durch eine Verarbeitungseinheit vom Typ PC (1), einer Chipkarte (3) für die Umsetzung wenigstens einer Anwendung, logischen Zugangsmitteln (Zugang 2) zur Karte durch ein Telekommunikationsnetz, logischen Zugangsmitteln (Zugang 1) zur Karte (3) ausgehend von einem PC (1) und Verwaltungsmitteln (20) der Zugänge ausgehend von dem Telekommunikationsnetz und / oder dem PC, **dadurch gekennzeichnet, dass** die Verwaltungsmittel (20) zu Folgendem geeignet sind:
- gemäß einem ersten Betriebsmodus die beiden logischen Zugangsmittel aktiv zu lassen, dann in den Verriegelungsmodus überzugehen, um vorübergehend einen der Zugänge zur Karte durch eines der Zugangsmittel ausgehend vom PC oder ausgehend vom Netz zu blockieren und dabei den anderen Zugang offen zu lassen, die durch die Netzzugangsmittel eintreffenden Befehle in Warteposition zu setzen, wenn der PC einen Zugang für eine unterschiedliche Anwendung von der verlangt, die vom Netz verwendet werden kann, wenn die blockierten Zugangsmittel Netzzugangsmittel sind, und die durch die blockierten Zugangsmittel eintreffenden Befehle in Warteposition zu setzen, wenn die blockierten Zugangsmittel Zugangsmittel ausgehend vom PC sind;
- gemäß einem zweiten Betriebsmodus, eines der Zugangsmittel vorübergehend zu deaktivieren, wobei das Terminal dann ausschließlich im Chipkarten-Lesemodus mit Zugang durch den einen Zugang für dieselbe Anwendung verlangenden PC funktioniert, die vom Netz verwendet werden kann, oder ausschließlich im Telekommunikations-Terminalmodus mit Zugang durch das Netz.

2. Telekommunikationsterminal gemäß Anspruch 1, **dadurch gekennzeichnet, dass** die logischen Zugangsmittel Interpretationsmittel von ausgehend vom PC ausgegebenen und / oder ausgehend vom Netz ausgegebenen Befehlen, Ausführungsmittel dieser Befehle umfassen, wenn es sich um vom Terminal ausführbare Befehle handelt, und Übertragungsmittel auf die Karte, wenn es sich um von der Karte ausführbare Befehle handelt.

3. Telekommunikationsterminal gemäß Anspruch 1, **dadurch gekennzeichnet, dass** die Verwaltungsmittel der Zugänge zur Karte logische Verriegelungsmittel des Zugangs zur Karte durch das Netz und logische Entriegelungsmittel umfassen, die durch das Terminal nach Eingang eines vom PC ausgegebenen Verriegelungsbefehles aktiviert werden.

4. Telekommunikationsterminal gemäß Anspruch 1, **dadurch gekennzeichnet, dass** die Verwaltungsmittel der Zugänge zur Karte exklusive reversible, den Telekommunikations-Terminal-Betrieb deaktivierende Übergangsmittel zum ausschließlichen Kartenlesemodus umfassen, die vom Terminal nach Eingang eines Befehls im Lesemodus aktiviert werden.

5. Telekommunikationsterminal gemäß Anspruch 3, **dadurch gekennzeichnet, dass** die Verriegelungsmittel eine zeitliche Verzögerung umfassen, während derer das Terminal zum Empfang eines Befehls des Telefonnetzes und zur Speicherung dieses Befehles bis zur Entriegelung in der Lage ist.

6. Telekommunikationsterminal gemäß Anspruch 5, **dadurch gekennzeichnet, dass** die Dauer der zeitlichen Verzögerung der für die Ausführung eines durch die Anwendung des PCs lancierten Befehles durch die Karte maximalen Dauer entspricht.

## Claims

1. A communications terminal (2) comprising means for access by a telecommunications network, means for access by a processing unit such as a microcomputer (1), a chip card (3) for implementing at least one application, logical access means (access 2) to the card by a telecommunications network, logical access means (access 1) to the card by a microcomputer (1) and means for managing access (20) from the telecommunications network and/or the microcomputer, **characterised in that** the management means (20) are suitable:
- according to a first operating mode, for leaving the two logical access means active, then changing to locked mode in order to momentarily block one of the means to access the card from the microcomputer or from the network, leaving the other access open, and to place the commands that arrive through the blocked access means on hold when the microcomputer requests to access an application other than the one that will probably be used by the network if the blocked access means are the network access means, and to place commands that arrive over the blocked access means on hold if the blocked access means are the means for access from the microcomputer;
- according to a second operating mode, for temporarily deactivating one of the access means, leaving the terminal to work exclusively in the chip-card reader mode with access by the microcomputer requesting access to the same application as will probably be used by the network, or exclusively in communications terminal mode with access by the network.

2. A communications terminal according to claim 1, **characterised in that** the logical access means comprise means for interpreting commands issued from the microcomputer and/or issued from the network, for performing these commands if they are commands that can be performed by the terminal or for transmitting them to the card if they are commands that can be performed by the card.

3. A communications terminal according to claim 1, **characterised in that** the means for managing access to the card comprise means for logical locking and unlocking access to the card by the network, activated by the terminal after receiving a locking command issued by the microcomputer.

4. A communications terminal according to claim 1, **characterised in that** the means for managing access to the card comprise means for switching between exclusive card-reader mode, which are reversible, deactivating the communications-terminal operating mode, activated by the terminal after receiving a reader mode command.

5. A communications terminal according to claim 3, **characterised in that** the locking means comprise a timeout during which the terminal is able to receive a command from the telephone network and to memorise this command until it is unlocked.

6. A communications terminal according to claim 5, **characterised in that** the duration of the timeout matches the maximum time required for the card to perform the command launched by the microcomputer application.
